# EUROPEAN PATENT SPECIFICATION

(11) **EP 3 660 373 B1**
(45) Date of publication and mention of the grant of the patent: **13.09.2023**
(21) Application number: 19211856.0
(22) Date of filing: 27.11.2019
(51) Int. Cl.: F16L 5/04, E04F 17/08, H02G 3/04, H02G 3/22

(54) **A SEALING SYSTEM**
EIN DICHTUNGSSYSTEM
UN SYSTÈME D'ÉTANCHÉITÉ

(30) Priority: 28.11.2018 SE 1851481
(43) Date of publication of application: 03.06.2020
(73) Proprietor: MCT Brattberg AB, 371 92 Karlskrona (SE)
(72) Inventor: Andersson, Joakim, 371 92 Karlskrona (SE); Fagerberg, Ola, 371 92 Karlskrona (SE)
(74) Representative: AWA Sweden AB

(56) References cited:
- WO-A1-2017/176203
- US-A- 3 703 303
- US-A1- 2005 133 242
- US-A1- 2007 126 229
- US-B1- 7 810 847

## Description

### Field of the invention

The present invention relates to a sealing system for an improved heat resistance in a partition wall according to claim 1.

### Background of the invention

Within many different technical fields, like for example merchant ships, offshore platforms and buildings with content of high importance there are several safety aspects that must be considered to avoid severe damages to the content within the structure as well as peoples working in, or close to, the area in case of accidents like for example fire or leaking water or gas from the outside or within the platform, ship or building.

In case of explosion, fire or leaking water the fire and/or leaking water and gas are often spread along wires, cables or pipes and in order to stop, or at least delay, the fire, water or gas from spreading within the structure, each cable, wire or pipe must be sealed where they are lead through partition walls within the platform, ship or building.

One frequently used sealing system that provide a reliable sealing of cables, wires or pipes extending through partition walls involves a metal frame permanently installed in the partition wall to provide a passage of a predetermined size for the cables, wires or pipes in the desired area of the partition wall. The cables, wires or pipes are during installation lead through the frame. The space within the frame is during installation of the sealing system filled with insert blocks packed in layers within the frame to completely fill the space within the frame. Each insert block consists of two insert block halves each provided with a semi-circular groove in one side of the block half such that a circular passage is formed through the insert block when the two block halves are put together. Each cable, wire or pipe extending through the frame is fitted in an insert block and packed within the frame. The outside dimensions of the insert blocks are selected so that a predetermined number of insert blocks have a size corresponding to the space within the frame. After the blocks are packed side by side in layers in the intended position a pressure applying device is arranged in the top part of the frame. The pressure applying device, upon activation, applies a pressure on the blocks to press the blocks together and provide the desired sealing around the cables, wires or pipes within the frame. Such a sealing system is disclosed in WO2017176203.

However, in order to make it possible to add further pipes, wires or cables extending via the frame in the partition wall, the frame preferably is selected slightly larger than actually required. The frame is then filled with insert halves without any pipe, wire or cable extending through the insert halves and in order to seal the space within the frame each groove is sealed by an insert plug fitted in the recess to close the groove. The insert plug has a radius corresponding to the radius of the groove to ensure that the groove is sealed once the pressure is applied.

Unfortunately, it has turned out that with increasing safty standards there is need to further enhance the system for sealing of the cable, wire or pipe going through the partition wall providing a passage for the cables, wires or pipes and facilitate related insulation.

### Summary of the invention

To this end there is provided an element and an improved sealing system that to at least some extent fulfils the needs defined above.

Preferred embodiments of the extension element, and the improved sealing system are outlined in the dependent claims.

According to the present inventive concept there is provided a sealing system comprising an extension element according to claim 1 which provides for improved heat resistance in the sealing system for a partition wall. The sealing system according to claim 1 further facilitates leading cables, wires or pipes through a partition wall and facilitates insulation of a partition wall. The extension element also provides for extension of an enclosed passage in the partition wall which in turn provides for extension of a sealing system permanently secured in the partition wall. Additionally, the extension element facilitates applying extra insulation onto the partition wall around the extended frame permanently secured in the partition wall.

According to the invention said first section is at least partly enclosing said second section and said first section is attached to said second section by a second fastening means. This embodiment provides for a facilitated installation of the extension element and a strong assembly of the extension element is achieved.

In one embodiment of the sealing system, the first section and the second section each comprising an inner and an outer surface, said first section has its inner surface substantially spaced between 0 - 10mm apart from the outer surface of the second section. This embodiment provides for a facilitated assembly of the first and second section.

In one embodiment of the sealing system, the first fastening means comprises any of wedging, screwing or welding or a combination thereof. This embodiment provides for a stable attachment of the first and second section. Furthermore, this facilitates the attachment of the extension element to a permanently installed frame element in the partition wall.

In one embodiment of the sealing system, any of the second section and the first section has a wedged shape so that when attached to each other the second section and the first section is attached by wedging. This embodiment provides for a facilitated and stable attachment of the first and second section that is also flexible, i.e an attachment being easy to operate and for the first and second section to be rotably adjusted in relation to each other when needed.

According to the invention, the second fastening means comprises at least two screws attaching the second section to the first section by the at least two screws penetrating the first section and connects to the second section, the at least two screws are evenly distributed along the perimeter of the first section. This embodiment provides for a facilitated attachment of the first and second section. Furthermore, this provide for the screws to connect to the second section evenly around its perimeter achieving a stable and a flexible system where adaptations in position of the first and second section are possible to be made when necessary, e.g. variations in desired insulation and/or wall thickness.

In one embodiment of the sealing system, the first section and the second section have corresponding shape being either circular or rectangular. This provides for a well fitted extension element and a facilitated assembly of the two sections.

In one embodiment of sealing system, the first section has an overlap of between 0.1 -10 cm when enclosing the second section. This enables for a proper attachment of the first section to the second section, and provides for a strengthen assembly.

In one embodiment of the sealing system, the shoulder comprising an outer surface and the inner surface of said first section is spaced between 0mm - 10mm apart from the outer surface of said shoulder. This embodiment provides for a facilitated assembly of the first section to the frame element.

In one embodiment of the sealing system, any of the shoulder or first section has a wedged shape so that when attached to each other the shoulder and second section are attached by wedging. This embodiment provides for a facilitated and stable attachment of the extension element to the frame element that is also flexible, i.e an attachment being easy to operate and for the extension element and the frame element to be rotably adjusted in relation to each other when needed.

In one embodiment of the sealing system, the first fastening means comprises at least two screws, penetrating the first section and connects to the shoulder, the at least two screws are evenly distributed along the perimeter of said first section. This embodiment provides for a facilitated attachment of the extension element to the frame element. Furthermore, this provides for the screws to connect to the shoulder evenly around its perimeter achieving a stable and a flexible system where adaptations in position of the extension element and the frame element are possible to be made when necessary, e.g. variations in desired insulation and/or wall thickness.

In one embodiment of the sealing system, the first section has an overlap of between 0.1-10 cm when enclosing the shoulder. This enables for a proper attachment of the first section to the second section, and provides for a strengthen assembly.

In one embodiment of the sealing system, the space within the frame element and the second section is intended to be fitted with insert blocks of a fire resistant material fitted around said cables, wires or pipes, for sealing around said one or more cables, wires or pipes. This provides a sealing system with proper insulation around the cables, wires or pipes led through the wall by the sealing system.

### Brief description of the drawings

In the following, preferred embodiments will be described with reference to the accompanying drawings, on which:
Fig. 1 schematically illustrates a perspective view of a sealing system, which does not form part of the invention, comprising a frame element and insert blocks.
Fig. 2a schematically illustrates a perspective view of a sealing system in a partition wall with an assembled extension element in accordance with at least one embodiment of the invention.
Fig. 2b schematically illustrates an exploded view of a sealing system in a partition wall with extension element in accordance with at least one embodiment of the invention.
Fig. 3a schematically illustrates a perspective view of a sealing system in a partition wall with an assembled extension element in accordance with at least one embodiment of the invention.
Fig. 3b schematically illustrates an exploded view of a sealing system in a partition wall with an assembled extension element in accordance with at least one embodiment of the invention.
Fig. 4 schematically illustrates a cross-section view of a sealing system in a partition wall with an extension element in accordance with at least one embodiment of the invention.

### Detailed description

The above, as well as additional objects, features and advantages of the present inventive concept, will be better understood through the following illustrative and non-limiting detailed description, with reference to the appended drawings. In the drawings like reference numerals will be used for like elements unless stated otherwise.

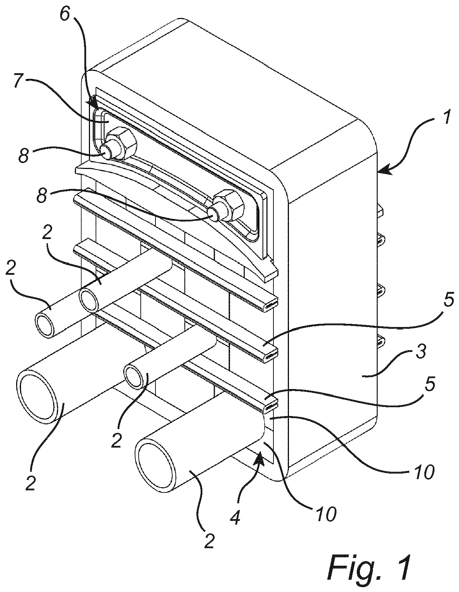

In figure 1 a sealing system 1 for sealing of cables 2, wires or pipes extending through a not illustrated partition wall is illustrated. The system involves a metal frame 3 intended to be permanently installed in the partition wall to provide a passage of a predetermined size in the partition wall. The cables, wires or pipes that need to pass through the partition wall are during installation lead through the frame. In order to seal the space within the frame an insert block 4, comprising two substantially identical insert block halves 10, is fitted around each of the cables, wires or pipes extending through the frame. The insert blocks, and the cable, wire or pipe extending through the insert block, are packed in layers within the frame to completely fill the space within the frame. The insert blocks have substantially square cross sectional shape and the outside dimensions of the insert blocks are selected so that a predetermined number of insert blocks have a size corresponding to the space within the frame to fill the space within the frame and provide the desired sealing of the passage in the partition wall. The different layers of insert blocks are separated by a guiding metal plate 5 in order to ensure that the layers remain in the intended position within the frame 3 when pressure is applied on the sealing system. If the number of cables, wires or pipes is less than the number of insert blocks required to fill the space within the frame, the insert blocks could be replaced by a solid elastic rectangular block to fill the remaining spaces within the frame alternatively an insert block could be used. After the blocks are packed side by side in layers in the intended position within the frame a pressure applying device 6 is arranged in the top part of the frame. The pressure applying device comprises a plate 7 arranged on each side of an elastic member and threaded shafts 8 extending through the elastic member. When the elastic member is compressed between the plates by the shafts and nuts arranged on the shaft the elastic element expand such that a pressure is applied on the layer packed within the frame 3 thereby eliminating gaps between the insert blocks and sealing the space within the frame. Different types of pressure applying devices are available and the described device could be replaced by anyone of the available devices.

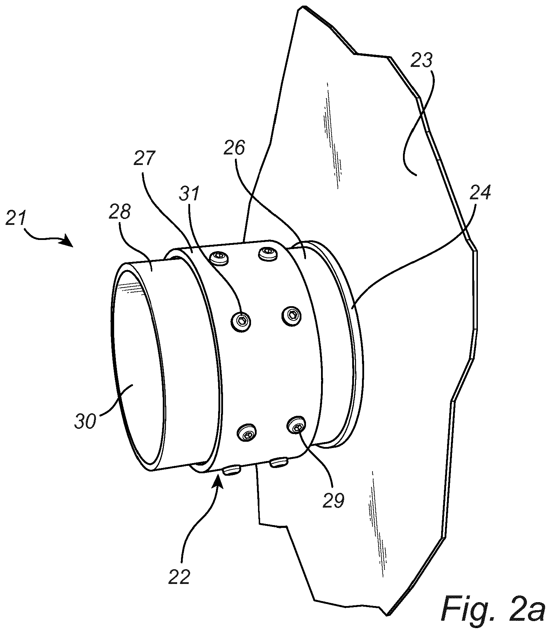

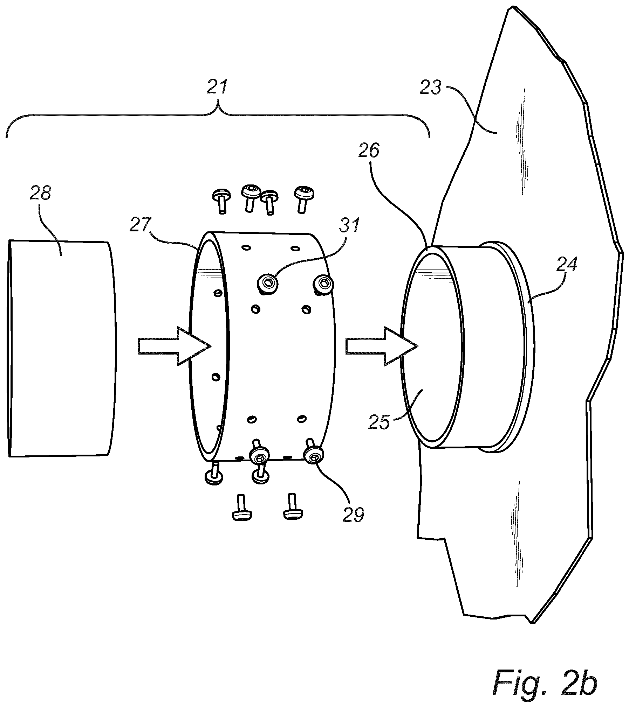

Fig. 2a and Fig. 2b schematically shows a perspective view and an exploded view respectively of a sealing system 21 in a partition wall 23 with an extension element 22 in accordance with at least one example embodiment of the invention.

Fig. 2a and Fig. 2b schematically shows an extension element 22 and a frame element 24 permanently secured in the partition wall 23 to form an enclosed passage 25 for one or more cables, wires or pipes through the partition wall 23. The frame element 24 is formed by a substantially flat member arranged perpendicular to the partition wall such that a shoulder 26 extending from the partition wall 23 is formed. The extension element 22 is intended to enclose said shoulder 26 of said frame element 24 and extend said enclosed passage 25 for one or more cables, wires or pipes.

The extension element 22 is comprising a first 27 and a second section 28. The first section 27 comprising a first fastening means 29 for attaching the extension element 22 to said shoulder 26. The second section 28 is formed so that an extended enclosed passage 30 formed by said second section is substantially equal to the enclosed passage 25 formed by said frame element 24, i.e the extended enclosed passage 30 formed by said second section 28 has substantially the same shape and dimensions as the enclosed passage 25 formed by said frame element 24. In Fig. 2a and Fig. 2b the shape of the frame element 24 is circular and the shape of the second section 28 is also circular having substantially the same diameter as the frame element 24.

Fig. 2a and Fig. 2b illustrate, according to at least one embodiment of present invention, that the extension element 22 may comprise of the first 27 and second section 28 attached to each other by a second fastening means 31 and the first section 27 is then at least partly enclosing said second section 28. The second fastening means 31 could be of any fastening means suitable to assemble the first 27 and second section 28. Although, Fig 2a and Fig 2b illustrate the first and second region being separate parts and when attached forming the extension element, the first 27 and second section 28 can be made in one piece forming the extension element 22.

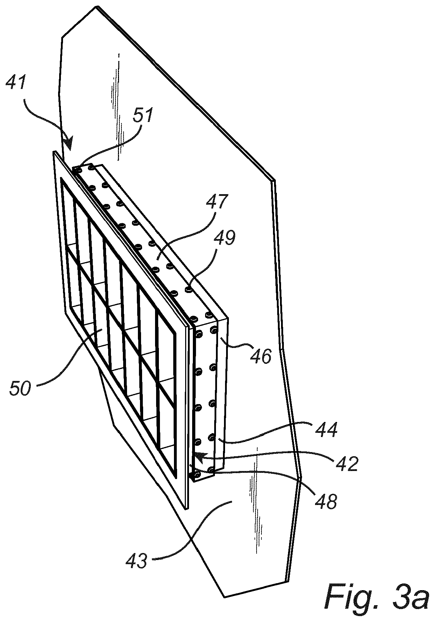

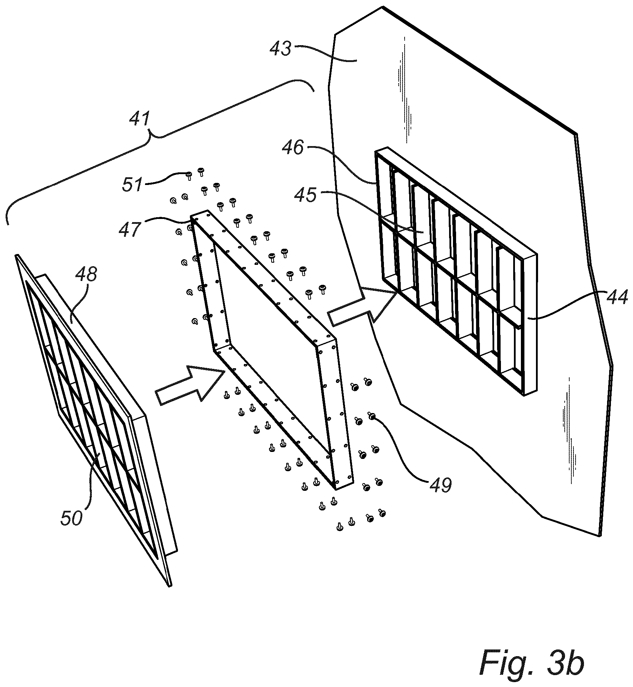

Fig. 3a and Fig 3b schematically shows a perspective view and an exploded view respectively of a sealing system 41 in a partition wall 43 with an extension element 42 in accordance with at least one example embodiment of the invention.

Fig. 3a and Fig 3b schematically shows an extension element 42 and a frame element 44 permanently secured in the partition wall 43 to form an enclosed passage 45 for one or more cables, wires or pipes through the partition wall 43, said frame element 42 is formed by a substantially flat member arranged perpendicular to the partition wall such that a shoulder 46 extending from the partition wall 43 is formed, the extension element is intended to enclose said shoulder 46 of said frame element 44 and extend said enclosed passage 45 for one or more cables, wires or pipes, said extension element 42 is comprising;
a first 47 and a second section 48, said first section 47 comprising a first fastening means 49 for attaching the extension element 42 to said shoulder 46, wherein the second section 48 is formed so that an enclosed passage formed by said second section 48 is substantially equal to the enclosed passage 45 formed by said frame element 44, i.e the extended enclosed passage 50 formed by said second section has substantially the same shape and dimensions as the enclosed passage 45 formed by said frame element. The first fastening means 49 could be of any fastening means suitable to attach the first section 47 to the shoulder 46.

In Fig. 3a and Fig. 3b the shape of the frame element 44 is rectangular and the shape of the second section 48 is also rectangular having substantially the same width and height as the frame element 44.

Fig. 3a and Fig. 3b illustrate, according to at least one embodiment of present invention, that the extension element 42 may comprise of the first 47 and second section 48 attached to each other by a second fastening means 51 and the first section 47 is then at least partly enclosing said second section 48. The second fastening 51 means could be of any fastening means suitable to assemble the first 47 and second section 48. Although, Fig 3a and Fig 3b illustrate the first and second region being separate parts and when attached forming the extension element, the first and second section can be made in one piece forming the extension element.

Although, Fig. 2 and Fig. 3 illustrates a circular and a rectangular shape respectively, of the frame element 24,44 and the second section 28,48 other shapes of these are also possible, and they could be of any shape suitable for the purpose of the invention.

With reference to Fig. 2 and Fig. 3 they illustrate the first fastening means and second fastening means being could be any of wedging, screwing or welding or a combination thereof.

With reference to Fig. 2 and Fig. 3, the extension element 22,42 according to the invention comprises a heat resistant material, preferably metal, and most preferably steel, aluminum or cast iron.

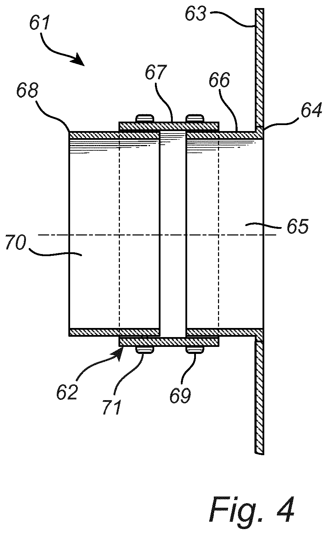

With reference to Fig. 4 a cross-section side view schematically illustrates the sealing system 61 according to at least one example embodiment.

A frame element 64 is permanently secured in a partition wall 63 to form an enclosed passage 65 for one or more cables, wires or pipes through the partition wall 63. A frame element 64 is formed by a substantially flat member arranged perpendicular to the partition wall such that a shoulder 66 extending from the partition wall 63 is formed. An extension element 62 is attached to the frame element 64 by enclosing said shoulder 66 of said frame element 64 and extends said enclosed passage 65 for one or more cables, wires or pipes.

The extension element 62 is comprising a first 67 and a second section 68.

The first section 67 is partly enclosing the second section 68, forming the extension element 62. Further, the first section 67 comprising a first fastening means 69 and the first section 67 is enclosing the shoulder 66 attaching the extension element 62 to the shoulder 66 of said frame element 64 using said first fastening means 69.

The second section 68 is formed so that an extended enclosed passage 70 formed by said second section is substantially equal to the enclosed passage 65 formed by said frame element 64, i.e the extended enclosed passage 70 formed by said second section 68 has substantially the same shape and dimensions as the enclosed passage 65 formed by said frame element 64

The first section 67 enclosing the second section 68 according the invention enables for the first section 67 to receive a shoulder 66 of a frame element 64 and thereby provide an extended enclosed passage 70 formed by said second section 68 that is substantially equal to the enclosed passage 65 formed by said frame element 64.

The first section is enclosing the second section 68 and the shoulder 66 respectively and has an overlap of preferably 0.1 - 10cm, i.e the first section has an overlap of 0.1 - 10cm when enclosing the second section and the first section has an overlap of 0.1 - 10cm when enclosing the shoulder 66.

A larger overlap within the mentioned range may be suitable for attaching the first section 67 to the second section 68 and/or the shoulder 66 respectively using screws or bolts, e.g. there may be at least two screws, penetrating the first section 67 and connects to the shoulder 66, the at least two screws are evenly distributed along the perimeter of said first section 67. A larger overlap within the mentioned range may also be used to attach the first section to the shoulder and/or the first section to the second section respectively through wedging, i.e any of the shoulder or first section and/or first section or second section has a wedged shape so that when attached to each other the shoulder and the first section and/or the first section and the second section is attached by wedging. An overlap within the whole range may be suitable for attaching the first section to the second section, and the first section to the shoulder using welding.

Fig. 4 also schematically illustrates the first section 67 and the second section 68 each having different widths, i.e the first section 67 and the second section 68 each comprising an inner and an outer surface, said first section has its inner surface substantially spaced 0 - 10mm apart from the outer surface of the second section.

In the above the invention has mainly been described with reference to a few embodiments. However, as is readily appreciated by a person skilled in the art, other embodiments than the ones disclosed above are equally possible within the scope of the inventive concept, as defined by the appended claims.

## Claims

1. A sealing system (21,41,61) for an improved heat resistance in a partition wall (23,43,63), said sealing system comprising;
a frame element (24,44,64) intended to be permanently secured in a partition wall to form an enclosed passage (25,45,65) for one or more cables, wires or pipes through the partition wall (23,43,63), said frame element (24,44,64) is formed by a substantially flat member arranged perpendicular to the partition wall such that a shoulder (26,46,66) extending from the partition wall is formed,
**Characterized in that** the sealing system further comprises
an extension element (22,42,62) at least partly enclosing said shoulder and attached to the shoulder, said extension element comprising
a first (27,47,67) and a second section (28,48,68), said first section comprising a first fastening means (29,49,69) for attaching the extension element to said shoulder,
wherein the second section is formed so that an extended enclosed passage (30,50,70) formed by said second section is substantially equal to the enclosed passage formed by said frame element,
wherein said first section is at least partly enclosing said second section and said first section is attached to said second section by a second fastening means (31,51,71), and wherein the second fastening means comprises at least two screws (31,51,71) attaching the second section to the first section by the at least two screws penetrating the first section and connects to the second section, the at least two screws are evenly distributed along the perimeter of the first section.

2. The sealing system according to claim 1, wherein the first section and the second section each comprising an inner and an outer surface, said first section has its inner surface substantially spaced 0 - 10mm apart from the outer surface of the second section.

3. The sealing system according to any of claims 1 or 2, wherein the first fastening means comprises any of wedging, screwing or welding or a combination thereof.

4. The sealing system according to claim 3, wherein any of the second section and the first section has a wedged shape so that when attached to each other the second section and the first section is attached by wedging.

5. The sealing system according to any of claims 1 to 4, wherein the first section and the second section have corresponding shapes being either circular or rectangular.

6. The sealing system according to any of claims 1 to 5, wherein the first section has an overlap of 0.1 - 10cm when enclosing the second section.

7. The sealing system according to claim 1, wherein the shoulder comprising an outer surface and the inner surface of said first section is spaced 0 - 10mm apart from the outer surface of said shoulder.

8. The sealing system according to any of claims 1 or 7, wherein any of the shoulder or first section has a wedged shape so that when attached to each other the shoulder and the second section is attached by wedging.

9. The sealing system according to any of claims 1, 7 or 8, wherein the first fastening means comprises at least two screws (29,49,69), penetrating the first section and connects to the shoulder, the at least two screws are evenly distributed along the perimeter of said first section.

10. The sealing system according to any of claims 1 or 7 to 9, wherein the first section has an overlap of 0.1-10cm when enclosing the shoulder.

11. The sealing system according to any of 1 or 7 to 10, wherein the space within the frame element and the second section is intended to be fitted with insert blocks of a fire-resistant material fitted around said cables, wires or pipes, for sealing around said one or more cables, wires or pipes.

## Patentansprüche

1. Dichtungssystem (21, 41, 61) für eine verbesserte Hitzebeständigkeit in einer Trennwand (23, 43, 63), wobei das Dichtungssystem umfasst:
ein Rahmenelement (24, 44, 64), das dazu bestimmt ist, dauerhaft in einer Trennwand befestigt zu sein, um einen geschlossenen Durchgang (25, 45, 65) für ein oder mehrere Kabel, Drähte oder Rohre durch die Trennwand (23, 43, 63) zu bilden, wobei das Rahmenelement (24, 44, 64) durch ein im Wesentlichen flaches Element gebildet ist, das senkrecht zu der Trennwand angeordnet ist, so dass eine Schulter (26, 46, 66) gebildet ist, die sich von der Trennwand erstreckt,
**dadurch gekennzeichnet, dass** das Dichtungssystem ferner umfasst:
ein Verlängerungselement (22, 42, 62), das die Schulter zumindest teilweise umschließt und an der Schulter angebracht ist, wobei das Verlängerungselement umfasst:
einen ersten (27, 47, 67) und einen zweiten Abschnitt (28, 48, 68), wobei der erste Abschnitt ein erstes Befestigungsmittel (29, 49, 69) umfasst, um das Verlängerungselement an der Schulter anzubringen,
wobei der zweite Abschnitt derart gebildet ist, dass ein erweiterter geschlossener Durchgang (30, 50, 70), der von dem zweiten Abschnitt gebildet ist, im Wesentlichen gleich dem geschlossenen Durchgang ist, der von dem Rahmenelement gebildet ist,
wobei der erste Abschnitt den zweiten Abschnitt zumindest teilweise umschließt und der erste Abschnitt an dem zweiten Abschnitt durch ein zweites Befestigungsmittel (31, 51, 71) angebracht ist, und wobei das zweite Befestigungsmittel mindestens zwei Schrauben (31, 51, 71) umfasst, die den zweiten Abschnitt an dem ersten Abschnitt anbringen, indem die mindestens zwei Schrauben den ersten Abschnitt durchdringen und mit dem zweiten Abschnitt verbunden sind, wobei die mindestens zwei Schrauben gleichmäßig entlang des Umfangs des ersten Abschnitts verteilt sind.

2. Dichtungssystem nach Anspruch 1, wobei der erste Abschnitt und der zweite Abschnitt jeweils eine innere und eine äußere Fläche umfassen, wobei die innere Fläche des ersten Abschnitts im Wesentlichen 0 - 10 mm von der äußeren Fläche des zweiten Abschnitts beabstandet ist.

3. Dichtungssystem nach einem der Ansprüche 1 oder 2, wobei das erste Befestigungsmittel ein Verkeilen, Verschrauben oder Verschweißen oder eine Kombination davon umfasst.

4. Dichtungssystem nach Anspruch 3, wobei der zweite Abschnitt und der erste Abschnitt eine Keilform aufweisen, so dass der zweite Abschnitt und der erste Abschnitt, wenn sie aneinander angebracht sind, durch Verkeilen angebracht sind.

5. Dichtungssystem nach einem der Ansprüche 1 bis 4, wobei der erste Abschnitt und der zweite Abschnitt entsprechende Formen aufweisen, die entweder kreisförmig oder rechteckig sind.

6. Dichtungssystem nach einem der Ansprüche 1 bis 5, wobei der erste Abschnitt eine Überlappung von 0,1 - 10 cm aufweist, wenn er den zweiten Abschnitt umschließt.

7. Dichtungssystem nach Anspruch 1, wobei die Schulter eine äußere Fläche umfasst und die innere Fläche des ersten Abschnitts 0 - 10 mm von der äußeren Fläche der Schulter beabstandet ist.

8. Dichtungssystem nach einem der Ansprüche 1 oder 7, wobei die Schulter oder der erste Abschnitt eine Keilform aufweist, so dass die Schulter und der zweite Abschnitt, wenn sie aneinander angebracht sind, durch Verkeilen angebracht sind.

9. Dichtungssystem nach einem der Ansprüche 1, 7 oder 8, wobei das erste Befestigungsmittel mindestens zwei Schrauben (29, 49, 69) umfasst, die den ersten Abschnitt durchdringen und mit der Schulter verbunden sind, wobei die mindestens zwei Schrauben gleichmäßig entlang des Umfangs des ersten Abschnitts verteilt sind.

10. Dichtungssystem nach einem der Ansprüche 1 oder 7 bis 9, wobei der erste Abschnitt eine Überlappung von 0,1-10 cm aufweist, wenn er die Schulter umschließt.

11. Dichtungssystem nach einem der Ansprüche 1 oder 7 bis 10, wobei der Raum innerhalb des Rahmenelements und des zweiten Abschnitts dazu bestimmt ist, mit Einlegeblöcken aus einem feuerfesten Material ausgestattet zu sein, die um die Kabel, Drähte oder Rohre herum angebracht sind, um die ein oder mehreren Kabel, Drähte oder Rohre abzudichten.

## Revendications

1. Système d'étanchéité (21, 41, 61) pour une résistance thermique améliorée dans une cloison de séparation (23, 43, 63), ledit système d'étanchéité comprenant :
un élément de cadre (24, 44, 64) destiné à être fixé de façon permanente dans une cloison de séparation pour former un passage fermé (25, 45, 65) pour un ou plusieurs câbles, fils ou conduits à travers la cloison de séparation (23, 43, 63), ledit élément de cadre (24, 44, 64) étant constitué d'un élément substantiellement plat disposé perpendiculairement à la cloison de séparation de manière à former un épaulement (26, 46, 66) s'étendant à partir de la cloison de séparation,
**caractérisé en ce que** le système d'étanchéité comprend en outre
un élément d'extension (22, 42, 62) entourant au moins partiellement ledit épaulement et fixé à l'épaulement, ledit élément d'extension comprenant
une première (27, 47, 67) et une deuxième section (28, 48, 68), ladite première section comprenant un premier moyen de fixation (29, 49, 69) destiné à fixer l'élément d'extension audit épaulement,
dans lequel la deuxième section est formée de telle façon qu'un passage fermé étendu (30, 50, 70) formé par ladite deuxième section est substantiellement identique au passage fermé formé par ledit élément de cadre,
dans lequel ladite première section entoure au moins partiellement ladite deuxième section et ladite première section est fixée à ladite deuxième section à l'aide d'un deuxième moyen de fixation (31, 51, 71), et dans lequel le deuxième moyen de fixation comprend au moins deux vis (31, 51, 71) fixant ladite deuxième section à la première section par les au moins deux vis pénétrant dans la première section et se raccordant à la deuxième section, les au moins deux vis étant réparties uniformément le long du périmètre de la première section.

2. Système d'étanchéité selon la revendication 1, dans lequel la première section et la deuxième section comprennent respectivement une surface intérieure et une surface extérieure, ladite première section a sa surface intérieure substantiellement espacée de 0-10 mm par rapport à la surface extérieure de la deuxième section.

3. Système d'étanchéité selon l'une quelconque des revendications 1 à 2, dans lequel le premier moyen de fixation comprend l'un quelconque parmi un calage, un vissage ou un soudage ou une combinaison de ceux-ci.

4. Système d'étanchéité selon la revendication 3, dans lequel l'une quelconque parmi la deuxième section et la première section présente une forme de cale, de sorte que lorsqu'elles sont fixées l'une à l'autre, la deuxième section et la première section sont fixées par calage.

5. Système d'étanchéité selon l'une quelconque des revendications 1 à 4, dans lequel la première section et la deuxième section présentent des formes correspondantes, lesquelles sont soit circulaires, soit rectangulaires.

6. Système d'étanchéité selon l'une quelconque des revendications 1 à 5, dans lequel la première section présente un chevauchement de 0,1 - 10 cm lorsqu'elle entoure la deuxième section.

7. Système d'étanchéité selon la revendication 1, dans lequel l'épaulement comprend une surface extérieure et la surface intérieure de ladite première section est espacé de 0 - 10 mm par rapport à la surface extérieure dudit épaulement.

8. Système d'étanchéité selon l'une quelconque des revendications 1 ou 7, dans lequel l'un quelconque parmi l'épaulement ou la première section présente une forme de cale, de sorte que lorsqu'ils sont fixés l'un à l'autre, l'épaulement et la deuxième section sont fixés par calage.

9. Système d'étanchéité selon l'une quelconque des revendications 1, 7 ou 8, dans lequel le premier moyen de fixation comprend au moins deux vis (29, 49, 69) pénétrant dans la première section et se raccordant à l'épaulement, les au moins deux vis étant réparties uniformément le long du périmètre de ladite première section.

10. Système d'étanchéité selon l'une quelconque des revendications 1 ou 7 à 9, dans lequel la première section présente un chevauchement de 0,1 - 10 cm lorsqu'elle entoure l'épaulement.

11. Système d'étanchéité selon l'une quelconque des revendications 1 ou 7 à 10, dans lequel l'espace à l'intérieur de l'élément de cadre et de la deuxième section est destiné à être muni de blocs d'insertion d'un matériau résistant au feu autour desdits câbles, fils ou conduits, pour assurer une étanchéité autour desdits un ou plusieurs câbles, fils ou conduits.
